# EUROPEAN PATENT APPLICATION

(11) **EP 2 639 136 A1**
(43) Date of publication of application: **18.09.2013**
(21) Application number: 12382087.0
(22) Date of filing: 12.03.2012
(51) Int. Cl.: B62D 3/02, B62D 5/04

(54) **Steering actuator mechanism for wheels of an automotive vehicle**

(71) Applicant: Edai Technical Unit, A.I.E., 48340 Amorebieta Vizcaya (ES)
(72) Inventor: Teijeiro Castro, Rafael, 48340 Amorebieta (Vizcaya) (ES); Seras Escolano, Ivan, 48340 Amorebieta (Vizcaya) (ES)
(74) Representative: Carpintero Lopez, Francisco

(57) **Abstract**

The present invention relates to a steering actuator mechanism for wheels of an automotive vehicle comprising a casing (1) with an intermediate body (1a) comprising an inner chamber (2a, 2b, 2c), an entry passage (2d) for the entrance of a rotation transmitting element provided for transferring rotational movements, and respective lateral bodies (1b, 1 c) with respective inner lateral housings (2e, 2f) communicated with the inner chamber (2a, 2b, 2c, 2g); and a conversion mechanism for converting the rotational movements of a linear movement element able to move axially to the right and to the left in response to the rotational movements into axial linear movements, the linear movement element having respective free ends emerging laterally from the lateral bodies (1b, 1c) of the casing (1) to connect the free ends to respective transmitter mechanisms connected to the wheels of the automotive vehicle; wherein
the rotation transmitting element is a worm screw (3) meshing with a gear ring (4) assembled in a rotating manner in the inner chamber (2a, 2b, 2c, 2g) of the casing (1) and comprising a central opening (4a);
the worm screw (3) is guided in a rotating manner in said entry passage (2d);
the linear movement element is a screw element (5) comprising an intermediate portion in the form of a ball screw (5a) and respective end portions (5b, 5c) axially guided in said inner lateral housings (2e, 2f) of the casing (1);
the ball screw (5a) meshes with the gear ring (4) by means of cross grooves of a grooved passage (6a) which rotates integrally with the gear ring (4) and extends through said central opening (4a) of the gear ring (4).

## Description

### Technical Field of the Invention

The present invention is encompassed in the technical field of steering mechanisms for the wheels of automotive vehicles and particularly the field of actuators for such mechanisms.

### Background of the Invention

The term steering of a vehicle is commonly used for the assembly of members which allow orienting the drive wheels, depending on the maneuvers performed by the driver on an operating control. The main function of the steering system is to allow a sufficiently precise steering control to drive in curves, overtaking actions or actions for avoiding obstacles present on the roadway and low-speed maneuvers, for example parking maneuver. The design of a steering system will further seek appropriate insulation from the disturbances originating from the road, while at the same time assuring an adequate tire-roadway contact and achieving an acceptable compromise between reduced stresses in the steering control in low-speed maneuvers and an adequate high-speed stability.

A conventional front steering system comprises a steering wheel and a unit of the steering column which transmits the force exerted by the driver on the steering wheel to a unit of the steering gear which reduces the speed of the steering wheel rotation, transmitting a large force to a steering connection which in turn transmits the movements of the steering gear to the front wheels. The steering gear not only converts the steering wheel rotation into movements which change the rolling direction of the tires, but also reduces the speed of the steering wheel rotation in order to lighten the operating force of the steering, increasing the operating force and transmitting this to the front wheels.

Power steering systems are used to help reduce the force which the driver must exert on the steering wheel to rotate the wheels. Power steering can be hydraulic, electro-hydraulic or electric.

Hydraulic steering uses hydraulic energy to generate the power assistance. To that end it uses a hydraulic pump connected to the motor, it being common for it to be directly coupled by means of a belt. Its operation can vary depending on the manufacturer but the most general model uses the steering rack itself as a hydraulic piston to generate the power assistance. When the driver thus rotates the steering wheel the hydraulic sensor allows the fluid to pass towards one of the sides of the piston, increasing the pressure on that side and making the rack move axially towards the side to which the driver rotates the steering wheel. Once the driver stops rotating the steering wheel the pressure is equaled and the rack is in its original position.

Electro-hydraulic powered steering, or EHPS, is a development of hydraulic steering. Instead of using a hydraulic pump connected to the motor it uses an electric motor to drive the hydraulic pump. Its main advantage is that by not being connected to the motor of the vehicle it prevents the mechanical problems associated with a belt transmission. It further reduces fuel consumption. In this case the hydraulic pump only functions when and at the rhythm needed to operate the steering. The motor driving the pump is supplied through the battery.

Finally, electrical powered steering systems, or EPS, are the most recent types of power steering. The name is due to the fact that that they use an electric motor to generate power assistance in the steering, and their advantage compared to the hydraulic and electro-hydraulic powered steering is that by not using hydraulic energy, they are lighter and simpler by eliminating the hydraulic installation and pump. Taking into account the location where power assistance is applied, electrical powered steering is divided into three groups: column drive, pinion drive and rack drive.

Documents DE-10310492-A1, DE-102009046386-A1, DE-102008041303-A1, DE-102007000955-A1 and DE-10353161-A1 describe steering actuator mechanisms for automotive vehicles comprising a casing with an intermediate body with an inner chamber, an entry passage for the entrance of a rotation transmitting element provided for transferring rotational movements, and respective lateral bodies with respective inner lateral housings communicated with the inner chamber; as well as a conversion mechanism for converting the rotational movements of a linear movement element able to move axially to the right and to the left in response to the rotational movements into axial linear movements, the linear movement element having respective free ends emerging laterally from the lateral bodies of the casing to connect the free ends to respective transmitter mechanisms, for example to the journals of the wheels or to an intermediate element such as steering links, connected to the wheels of the automotive vehicle.

These actuator mechanisms involve the use of a motor-nut transmission which is done by means of a belt with the drawbacks which it has, for example assembly, continuous assurance of the tension, maintenance, wear, possibility of slipping... etc. On the other hand, power steering, the necessary force of the corresponding motor must be relatively high because the reduction which can be achieved in a belt transmission is limited, in addition to the fact that belt mechanisms do not ensure system irreversibility.

On the other hand document US 2004/0020705 A1 describes an actuator mechanism comprising a ball screw which rotates but does not axially move, generating the translation of a ball nut which is toothed in its outer diameter and which meshes with a pinion, causing it to rotate. The input is the rotation of the ball screw and the output is the rotation of the pinion. The pinion will generate a movement similar to that of a connecting rod-crank and will orient the wheels. This actuator mechanism also has the drawback that the reduction which can be achieved is limited and does not guarantee system irreversibility

### Description of the Invention

The purpose of the present invention is to overcome the drawbacks of the state of the art detailed above by means of a steering actuator mechanism for wheels of an automotive vehicle comprising a casing with an intermediate body with an inner chamber, an entry passage for the entrance of a rotation transmitting element provided for transferring rotational movements, and respective lateral bodies with respective inner lateral housings communicated with the inner chamber; as well as a conversion mechanism for converting the rotational movements of a linear movement element able to move axially to the right and to the left in response to the rotational movements into axial linear movements, the linear movement element having respective free ends emerging laterally from the lateral bodies of the casing to connect the free ends to respective transmitter mechanisms, for example to the journals of the wheels or to intermediate elements such as steering links, connected to the wheels of the automotive vehicle, in which
the rotation transmitting element is a worm screw meshing with a gear ring assembled in a rotating manner in the inner chamber of the casing and comprising a central opening;
the worm screw is guided in a rotating manner in said entry passage;
the linear movement element is a screw element comprising an intermediate portion in the form of a ball screw and respective end portions axially guided in said inner lateral housings of the casing preventing the rotation of said screw;
the ball screw meshes with the ring by means of transversal grooves of a grooved passage which rotates integrally with the gear ring and extends through said central opening of the gear ring. In this actuator mechanism the worm screw transfers the received rotational movements to the ring, thereby reducing the input rotational movement, and in turn achieving an irreversible system. The axis of rotation of the worm screw can be, for example, perpendicular to the axis of rotation of the gear ring.

The rotational movement of the gear ring is transmitted to the ball screw by means of the grooved passage. The circulation of the balls between the grooved passage and the grooves of the ball screw mechanically joins the ring and the ball screw, such that the rotational movement of the ring is transformed into a right/left linear movement of the ball screw element. Given that the end portions are axially guided in the inner lateral housings, the ball screw element can move neither in a radial manner nor in a rotating manner, so the respective transmitter mechanisms only receive liner movements. To that end, the end portions of the ball screw element are axially guided in respective anti-rotation parts assembled in said lateral housings in respective end areas, each close to one of the free ends of a respective end portion of the ball screw element.

According to the invention, the gear ring can comprise a cylindrical central portion through which the grooved passage extends and with lateral portions with respective outer contact surfaces protruding laterally from the gear ring, as well as bearings assembled in the inner chamber of the casing and rolling on said contact surfaces.

The grooved passage can alternatively be an inner axial passage of a cylindrical nut fixed to the gear ring. In this case the actuator mechanism can comprise at least one lateral retention part comprising a contact surface and fixed to one side of the gear ring and at least one bearing assembled in the chamber of the casing and rolling on said bearing surface. The actuator mechanism can thus comprise at least a first retention part fixed to a first side of the gear ring and comprising a first contact surface, and at least a first bearing assembled in a first inner portion of the inner chamber and rolling on said first contact surface, as well as at least a second retention part fixed to a second side of the gear ring and comprising a second contact surface, and at least a second bearing assembled in a second inner portion of the inner chamber and rolling on said second contact surface.

In a preferred embodiment, the inner chamber comprises an intermediate annular portion open towards the entry passage, and respective lateral annular portions, such that the gear ring rotates in said intermediate portion, and each of the bearings is at least partially assembled in one of the lateral annular portions. The intermediate annular portion preferably has a greater diameter than the lateral annular portions, although other possibilities are also possible, for example that all the annular portions have the same diameter, or that the three annular portions have different diameters, or that two of the annular portions have an equal diameter and the other a different diameter.

According to the invention, the worm screw can be guided in a rotating manner in the entry passage of the casing by means of a first bearing close to a first end of the entry passage and a second bearing close to a second end. The first end can be an open end and the second end a closed end, although there is also the possibility that both ends are open ends. The worm screw can be coupled to a rotating shaft which transfers rotational movements of a steering element, such as for example a steering column, an intermediate element between the steering column and the worm screw such as a reducer/multiplier or, in the case of rear steering, by means of a countershaft of the front steering mechanism, or the output shaft of a motor which can be, for example, electric, hydraulic or magnetic.

According to what is disclosed in the above description, the actuator mechanism according to the present invention serves for both the front steering and for the rear steering of an automotive vehicle, and furthermore for automotive vehicles with more than two shafts any of which have steering. This actuator mechanism further takes up very little volume and therefore can also be applied to small vehicles, is light, simple in terms of its structure and robust, it can be decoupled from the steering column and requires a reduced entry stress.

### Brief Description of the Drawings

Aspects and embodiments of the invention based on drawings are described below, in which
Figure 1 is a front view of an embodiment of an actuator mechanism according to the present invention and its connection to the front wheels of an automotive vehicle;
Figure 2 is an axial section view of the actuator mechanism shown in Figure 1;
Figure 3 is an enlarged partial section view of the actuator mechanism shown in Figure 2;
Figure 4 is a partially sectioned front perspective view of the actuator mechanism shown in Figure 2;
Figure 5 is a partially sectioned rear perspective view of the actuator mechanism shown in Figure 2;

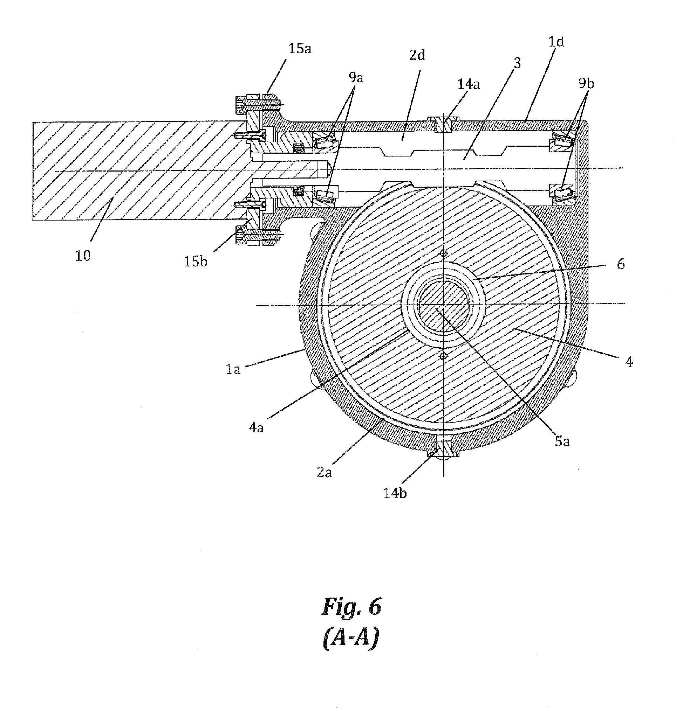

Figure 6 is a section view through line A-A shown in Figure 2.

### Reference numbers appear in these figures identifying the following elements:

- 1: casing
- 1 a: intermediate body
- 1 b, 1 c: lateral bodies
- 1d: entry portion
- 1e: securing lugs
- 2a, 2b, 2c: inner chamber
- 2a: intermediate annular portion
- 2b, 2c: lateral annular portions
- 2d: entry passage
- 2e, 2f: inner housings
- 2g: axial chamber
- 3: worm screw
- 4: gear ring
- 4a: central opening
- 5: screw element
- 5a: ball screw
- 5b, 5c: end portions
- 6: cylindrical nut
- 6a: grooved passage
- 7a, 7b: bearings
- 8a, 8b: retention parts
- 9a: first bearing
- 9b: second bearing
- 10: rotation generating or transmitting element (steering column, motor or transmitting element)
- 11a, 11b: anti-rotation parts
- 12a, 12b: lateral plugs
- 13a, 13b: O-ring
- 14a: upper plug
- 14b: lower plug
- 15a, 15b: coupling flanges
- 16a, 16b: connecting joints
- 17a, 17b: connecting links
- 18a, 18b: damper springs
- 19a, 19b: suspension arms
- 20: Journal
- 21: tire

### Ways of Carrying Out the Invention

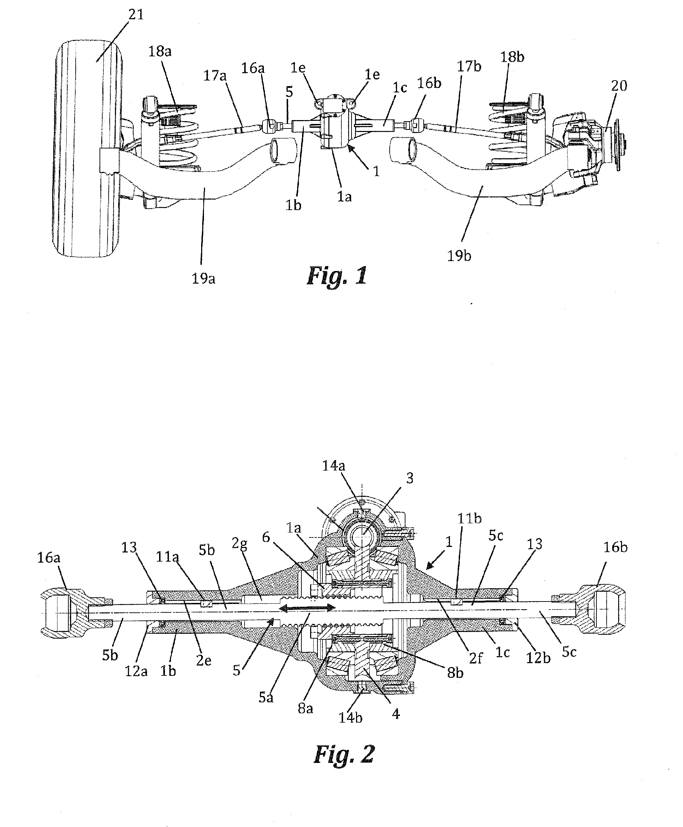

In the embodiment shown in Figure 1, the steering actuator mechanism -1- for wheels of an automotive vehicle comprises a casing -1- with an intermediate body -1a-and respective lateral bodies -1b, 1c- The ends of a conventionally connected ball screw element -5- protrude from the lateral bodies -1b, 1c-, through respective connecting joints -16a, 16b-, with respective steering links -17a, 17b- each coupled to the journal of the wheel -20- in which a rim with its corresponding tyre is assembled. Damping springs -18a, 18b- and suspension arms -19a, 19b- are also conventionally provided. The casing -1- has a pair of securing lugs -1e- in its front portion for coupling the casing -1- to the chassis of the automotive vehicle by means of screws or corresponding studs and nuts.

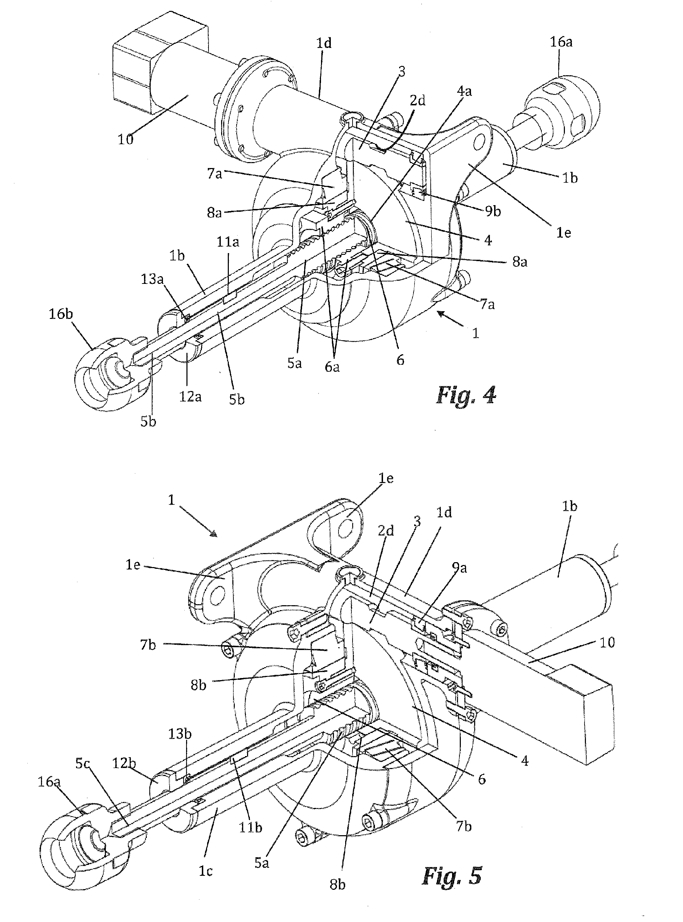

As can be seen in Figures 2 to 5, the intermediate body of the casing -1-comprises an inner chamber -2a, 2b, 2c, 2g- and an entry passage -2d- provided in an entry body -1d- which forms part of the intermediate body -1- and communicates with the upper portion of the inner chamber -2a, 2b, 2c, 2g- while the lateral bodies-1c, 1 b-comprise respective inner lateral housings -2e, 2f- communicated with the inner chamber -2a, 2b, 2c-. The inner chamber -2a, 2b, 2c, 2g- comprises an intermediate annular portion -2a- and respective lateral annular portions -2b, 2c-. The intermediate annular portion -2a- has a greater diameter than the lateral annular portions -2b, 2c-and is open towards the entry passage -2d-.

The inner chamber -2a, 2b, 2c-, the lateral housings -2e-, 2f- and the entry passage -2d- can be filled with a lubricant (not shown in the drawings) which can be introduced through an entry hole which can be blocked by an upper plug -14a- and which can be discharged through an exit hole which can be blocked by a lower plug -14b-

A worm screw -3- is mounted in a rotating manner in the entry passage -2d-. The entry passage -2d- of the casing -1- comprises an open end and a closed end. The worm screw -3- is guided in a rotating manner in a first bearing -9a- close to said open end and in a second bearing -9b- close to said closed end. The end of the worm screw close to the first bearing -9a- is coupled, by means of coupling flanges -15a, 15b- to a rotating shaft, specifically a rotation generating element -10- transmitting rotational movements of a steering element, such as for example the steering wheel (not shown in the drawings) of the automotive vehicle or a motor. The worm screw -3-thus acts as a rotation transmitting element of the rotation generating element-10-.

The worm screw -3- meshes with a gear ring -4- assembled in a rotating manner in the intermediate annular portion -2a- of the inner chamber -2a, 2b, 2c- of the casing -1- and comprising a central opening -4a-, in which a nut -6- with an inner axial passage in the form of a grooved passage -6a- is securely assembled. Respective lateral retention parts -8a, 8b- with respective contact surfaces are assembled in the lateral annular portions -2b, 2c- and fixed to both sides of the gear ring -4-. Bearings -7a, 7b- on the contact surfaces are also assembled in the lateral annular chambers -2b, 2c-. The axis of rotation of the worm screw -3- is perpendicular to the axis of rotation of the gear ring -4-.

Through the grooved passage -6a- of the nut -6- there extends a screw element -5- comprising an intermediate portion in the form of a ball screw -5a- and respective end portions -5b, 5c- axially guided in the inner lateral housings -2e, 2f- of the casing -1-. The ball screw -5a- meshes with cross grooves of the grooved passage -6a- which rotates integrally with the gear ring -4- and extends through said central opening -4a- of the gear ring -4-. The end portions -5b, 5c- of the ball screw element -5- are axially guided by respective anti-rotation parts -11 a, 11 b- assembled in the lateral housings -2e. 2f-. The anti-rotation parts -11 a, 11 b- are assembled in an end area close to the free end of a respective end portion -5b, 5c- of the ball screw element -5-. The free ends of the end portions of the screw element -5- are coupled to the joints -16a, 16b-. The lateral housings -2e, 2f- are blocked by respective lateral plugs -12a, 12b- which function is to guide the screw element -5- axially and they further press on respective O-ring -13a, 13b- which in turn surrounds the respective end portions -5b, 5c- of the screw element -5- inside the lateral housings -2e, 2f-.

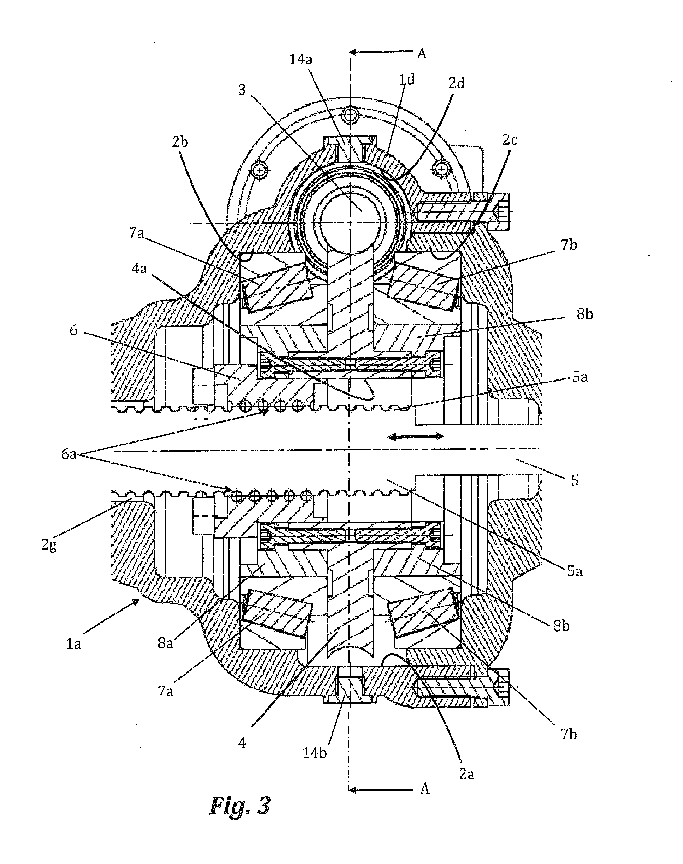

When the steering wheel of the automotive is rotated, the corresponding rotational movement is transmitted through the rotation generating element -10- to the worm screw -3-. The corresponding rotational movement of the worm screw -3- rotates the gear ring -4- the rotation of which drives the nut -6-, such that the rotational movement of the gear ring -4- is transmitted to the ball screw -5a- through the grooved passage -6a-. The circulation of the balls between the grooved passage -6a- and the grooves of the ball screw -5a- mechanically joins the gear ring -4- and the ball screw -5a-. The rotational movement of the gear ring -4- is thus transformed as shown by the arrows in Figures 2 and 3, into a right/left linear movement of the ball screw in the axial chamber -2g- and therefore also of the entire screw element -5-. Given that the end portions -5b, 5c- of the screw element -5- are axially guided in the inner lateral housings -2e, 2f-, the ball screw element -5- cannot move either in a radial manner or in a rotating manner, so the respective transmitter mechanisms, i.e., the steering links -17a, 17b- only receive linear movements.

## Claims

1. Steering actuator mechanism for wheels of an automotive vehicle comprising
a casing (1) with an intermediate body (1a) comprising an inner chamber (2a, 2b, 2c, 2g), an entry passage (2d) for the entrance of a rotation transmitting element provided for transferring rotational movements, and respective lateral bodies (1b, 1 c) with respective inner lateral housings (2e, 2f) communicated with the inner chamber (2a, 2b , 2c, 2g);
a conversion mechanism for converting the rotational movements of a linear movement element able to move axially to the right and to the left in response to the rotational movements into axial linear movements, the linear movement element having respective free ends emerging laterally from the lateral bodies (1b, 1 c) of the casing (1) to connect the free ends to respective transmitter mechanisms connected to the wheels of the automotive vehicle;
**characterized in that**
the rotation transmitting element is a worm screw (3) meshing with a gear ring (4) assembled in a rotating manner in the inner chamber (2a, 2b, 2c, 2g) of the casing (1) and comprising a central opening (4a);
the worm screw (3) is guided in a rotating manner in said entry passage (2d); the linear movement element is a screw element (5) comprising an intermediate portion in the form of a ball screw (5a) and respective end portions (5b, 5c) axially guided in said inner lateral housings (2e, 2f) of the casing (1);
the ball screw (5a) meshes with the gear ring (4) by means of cross grooves of a grooved passage (6a) which rotates integrally with the gear ring (4) and extends through said central opening (4a) of the gear ring (4).

2. Actuator mechanism according to claim 1, **characterized in that**
the gear ring (4) comprises a cylindrical central portion through which the grooved passage (6a) extends and with lateral portions with respective outer contact surfaces protruding laterally from the gear ring (4);
it comprises bearings (7a, 7b) assembled in the inner chamber (2a, 2b, 2c) of the casing (1) and rolling on said contact surfaces.

3. Actuator mechanism according to claim 1, **characterized in that** the grooved passage (6a) is an inner axial passage of a cylindrical nut (6) fixed to the gear ring (4).

4. Actuator mechanism according to claim 3, **characterized in that** it comprises at least one lateral retention part (8a, 8b) comprising a contact surface and fixed to one side of the gear ring (4) and at least one bearing (7a, 7b) assembled in the inner chamber (2a, 2b, 2c, 2g) of the casing (1) and rolling on said bearing surface.

5. Mechanism according to claim 3, **characterized in that** it comprises
at least a first retention part (8a) fixed to a first side of the gear ring (4) and comprising a first contact surface, and at least a first bearing (7a) assembled in a first inner portion (2b) of the inner chamber (2a, 2b, 2c, 2g) and rolling on said first contact surface;
at least a second retention part (8b) fixed to a second side of the gear ring (4) and comprising a second contact surface, and at least a second bearing (7b) assembled in a second inner portion (2c) of the inner chamber (2a, 2b, 2c, 2g) and rolling on said second contact surface.

6. Actuator mechanism according to claim 4 or 5, **characterized in that**
the inner chamber (2a, 2b, 2c, 2g) comprises an intermediate annular portion (2a) open towards the entry passage (2d), and respective lateral annular portions (2b, 2c).
the gear ring (4) rotates in said intermediate portion (2a), and each of the bearings (7a, 7b) is at least partially assembled in one of the lateral annular portions (2b, 2c).

7. Actuator mechanism according to claim 6, **characterized in that** the intermediate annular portion (2a) has a greater diameter than the lateral annular portions (2b, 2c).

8. Actuator mechanism according to any of claims 1 to 7, **characterized in that** the entry passage (2d) of the casing (1) comprises a first end and a second end;
the worm screw (3) is guided in a rotating manner in a first bearing (9a) close to said first end and in a second bearing (9b) close to said second end.

9. Actuator mechanism according to claim 8, **characterized in that** the first end of the entry passage (2d) is an open end and the second end of the entry passage is a closed end.

10. Actuator mechanism according to any of claims 1 to 9, **characterized in that** the worm screw (3) can be coupled to a rotating shaft (10) transferring rotational movements of a steering element.

11. Actuator mechanism according to any of claims 1 to 10, **characterized in that** the worm screw (3) has an axis of rotation perpendicular to the axis of rotation of the gear ring (4).

12. Actuator mechanism according to any of claims 1 to 11, **characterized in that**
the lateral end portions (5b, 5c) of the ball screw element (5) are axially guided in respective anti-rotation parts (11a, 11b) assembled in said lateral housings (2e, 2f);
each of the anti-rotation parts (11a, 11b) is assembled in an end area close to the free end of a respective end portion (5b, 5c) of the ball screw element (5).
